# EUROPÄISCHE PATENTSCHRIFT

(11) **EP 0 810 359 B1**
(45) Veröffentlichungstag und Bekanntmachung des Hinweises auf die Patenterteilung: **30.05.2001**
(21) Anmeldenummer: 97101080.6
(22) Anmeldetag: 24.01.1997
(51) Int. Cl.: F02D 11/10

(54) **Lastverstellvorrichtung**
Load control device
Dispositif de commande de charge

(30) Priorität: 01.06.1996 DE 19622141
(43) Veröffentlichungstag der Anmeldung: 03.12.1997
(73) Patentinhaber: Mannesmann VDO AG, 60326 Frankfurt (DE)
(72) Erfinder: Seeger, Armin, 65779 Kelkheim (DE)
(74) Vertreter: Klein, Thomas, Dipl.-Ing. (FH)

(56) Entgegenhaltungen:
- EP-A- 0 455 882
- EP-A- 0 455 883
- EP-A- 0 540 811
- DE-A- 4 141 104
- DE-A- 19 524 941
- US-A- 5 014 666
- US-A- 5 038 733

## Beschreibung

Die Erfindung betrifft eine Lastverstellvorrichtung für ein die Leistung einer Brennkraftmaschine bestimmendes, insbesondere als Drosselklappe ausgebildetes, auf einer Stellwelle angeordnetes Stellglied, wobei die Stellwelle über ein drehfest mit ihr verbundenes Stellteil mittels eines reversierbaren Stellgetriebes zwischen einer Minimallaststellung und einer Vollaststellung schwenkbar antreibbar ist, mit einer als Drehfeder ausgebildeten, vorgespannten Rückstellfeder, die die Stellwelle in Minimallastrichtung beaufschlagt, und einer Notlauffeder, durch die die Stellwelle in Vollastrichtung bis zu einer Notlaufstellung bewegbar ist (siehe z.B. US-A-5038733).

Lastverstellvorrichtungen der vorstehenden Art sind allgemein unter der Bezeichnung E-Gas zur Leistungsverstellung der Brennkraftmaschine von Kraftfahrzeugen bekannt. Bei ihnen ist zur Minimierung des Kraftstoffverbrauchs die Minimallaststellung so ausgelegt, daß die Brennkraftmaschine dabei im Leerlauf noch so eben gleichmäßig läuft. Das führt dazu, daß es in Minimallaststellung nicht möglich ist, ein ausreichendes Drehmoment zu erzeugen, um das Kraftfahrzeug zu bewegen. Das kann jedoch erforderlich werden, wenn das Kraftfahrzeug aus einem Gefahrenbereich gefahren werden muß, die Lastverstellvorrichtung jedoch infolge eines Ausfalls der Steuerelektronik oder des Stellgetriebes nicht mehr durch Betätigung des Fahrpedals verstellt werden kann. Aus diesem Grunde sieht man bei den bekannten Lastverstellvorrichtungen zusätzlich zur Rückstellfeder eine Notlauffeder vor, welche dafür sorgt, daß das Stellglied bei Ausfall der Steuerelektronik oder des Stellgetriebes sich aus der Minimallaststellung zwangsläufig in eine Notlaufstellung bewegt, in der die Brennkraftmaschine ein ausreichend großes Drehmoment erzeugt, um das Kraftfahrzeug mit geringer Geschwindigkeit zu bewegen. Diese Notlaufstellung wird durch einen gegen die Kraft der Rückstellfeder verschieblichen Anschlag festgelegt, gegen den das Stellteil mittels der Notlauffeder gespannt ist und der von dem Stellteil gegen die Kraft der Rückstellfeder verschoben werden kann, wenn sich das Stellteil aus der Notlaufstellung in Richtung der Vollaststellung bewegt.

Die für das Erreichen der Notlaufstellung erforderliche Notlauffeder erfordert - abgesehen von den Kosten - einen entsprechenden Bauraum und führt zu einer Erhöhung des Gewichtes im Vergleich zu einer Lastverstellvorrichtung ohne zwangsläufige Bewegung in eine Notlaufstellung bei einem Defekt.

Man hat bereits daran gedacht, zur Verringerung der Abmessungen der Lastverstellvorrichtung eine einzige Feder gleichzeitig als Rückstellfeder und als Notlauffeder einzusetzen und jeweils einen gehäusefesten Anschlag für die Notlaufstellung und für die Minimallaststellung vorzusehen. Eine derartige Lastverstellvorrichtung benötigt jedoch wie die Lastverstellvorrichtung mit zwei gegensinnig gespannten Federn hohe Federkräfte und damit hohe Stellkräfte zum Verstellen der Stellwelle. Die hohen Stellkräfte erfordern allerdings einen leistungsstarken Antrieb, welcher ein hohes Gewicht und damit große Abmessungen aufweist. Vorteilhaft wären Federn mit einer besonders flachen Federkennlinie. Solche Federn benötigen jedoch für einen großen Federweg einen großen Bauraum.

Der Erfindung liegt das Problem zugrunde, eine Lastverstellvorrichtung der eingangs genannten Art so zu gestalten, daß sie möglichst geringe Stellkräfte benötigt und deshalb besonders einfach und kompakt aufgebaut ist.

Dieses Problem wird erfindungsgemäß dadurch gelöst, daß die Rückstellfeder und die Notlauffeder durch eine einzige Drehfeder gebildet sind, deren erstes Ende mit der Stellwelle und deren zweites Ende mit einem Abstützteil verbunden ist, und daß mit dem Stellgetriebe ein Vollastgetriebe und ein Minimallastgetriebe gekoppelt sind, wobei das Vollastgetriebe zwischen der Vollaststellung und der Notlaufstellung und das Minimallastgetriebe zwischen der Minimallaststellung und der Notlaufstellung zur Übertragung von Drehmomenten auf das Abstützteil ausgebildet sind.

Durch diese Gestaltung wird eine einzige Feder als Rückstellfeder und als Notlauffeder doppelt genutzt und bei einem Betätigen des Stellgetriebes in Abhängigkeit von dem Stellwinkel der Stellwelle über das Minimallastgetriebe oder das Vollastgetriebe gespannt. Die Stellwelle schwenkt aus jeder beliebigen Stellung automatisch in die Notlaufstellung, wenn keine Kräfte auf das Stellgetriebe wirken. Die zum Verstellen des Stellgetriebes erforderlichen Stellkräfte lassen sich einfach durch die Übersetzungen des Minimallastgetriebes und des Vollastgetriebes einstellen. Hierdurch ist es möglich, einen besonders flachen Anstieg der Stellkräfte bis zu der Minimallaststellung oder der Vollaststellung zu erzeugen. Da die Drehfeder zwischen der Stellwelle und dem Abstützteil angeordnet ist, bewegen sich ihre Enden bei einer Veränderung des Stellwinkels der Stellwelle aufeinander zu oder voneinander weg. Hierdurch ist es möglich, den Federweg über den Stellbereich der Stellwelle frei einzustellen. Dies ist besonders bei dem Vollastgetriebe von Vorteil, da sich dieses über einen größeren Stellbereich erstreckt als das Minimallastgetriebe und deshalb einen besonders flachen Verlauf der Stellkräfte erfordert.

Das Vollastgetriebe und das Minimallastgetriebe läßt sich gemäß einer vorteilhaften Weiterbildung der Erfindung besonders platzsparend in der Lastverstellvorrichtung anordnen, wenn das Abstützteil ein Zahnsegment hat, welches zum Kämmen eines mit dem Stellgetriebe verbundenen Zahnrades zwischen der Vollaststellung und der Notlaufstellung ausgebildet ist, und wenn das Minimallastgetriebe einen Nocken hat, welcher zum Verschwenken des Abstützteils zwischen der Minimallaststellung und der Notlaufstellung ausgebildet ist. Damit steht das Zahnsegment nur zwischen der Vollaststellung und der Notlaufstellung im Eingriff mit dem mit dem Stellgetriebe verbundenen Zahnrad. Bei einem Unterschreiten der Notlaufstellung gelangt das Zahnsegment aus dem Eingriffsbereich des Zahnrades heraus und wird anschließend von dem Nocken weiterbewegt. Die Übersetzung des Vollastgetriebes läßt sich damit über die Durchmesser des Zahnrades und des Zahnsegments einstellen. Die Übersetzung des Minimallastgetriebes ist abhängig von der Entfernung des Berührungspunktes des Nokkens an dem Zahnsegment von dem Drehpunkt des Zahnsegmentes.

Es versteht sich, daß der Nocken auf die verschiedenste Weise ausgebildet sein kann. So ist es möglich, daß zur Verringerung der Reibung der Nocken durch eine freidrehbare Rolle gebildet sein kann,

Die Abmessungen der Lastverstellvorrichtung lassen sich gemäß einer anderen vorteilhaften Weiterbildung der Erfindung weiter verringern, wenn das Abstützteil auf der Stellwelle drehbar gelagert ist.

Die Lastverstellvorrichtung benötigt gemäß einer anderen vorteilhaften Weiterbildung der Erfindung eine besonders geringe Anzahl der zu montierenden Bauteile, wenn das Stellgetriebe ein von einem Antriebsritzel angetriebenes durchmessergroßes Zwischenzahnrad hat, welches mit einem das Stellteil verschwenkenden durchmesserkleinen Zahnrad und dem das Zahnsegment des Abstützteils antreibenden Zahnrad drehfest und koaxial verbunden ist, und wenn der Nocken auf dem Zwischenzahnrad angeordnet ist. Hierdurch hat die erfindungsgemäße Lastverstellvorrichtung eine sandwichbauweise, die zudem zu einer besonders geringen Bauhöhe führt.

Reibungsverluste in den Getrieben müssen über große Federkräfte und damit über hohe Stellkräfte überwunden werden. Das Minimallastgetriebe hat gemäß einer anderen vorteilhaften Weiterbildung der Erfindung besonders geringe Reibungsverluste, wenn der Nocken eine bogenförmige und das Abstützteil an seiner dem Nocken zugewandten Seite eine halbkreisförmige Kontur aufweist. Hierdurch rollt sich der Nocken an dem Abstützteil ab, so daß bei einem Kontakt des Nockens mit dem Abstützteil besonders geringe Stellkräfte erforderlich sind.

Die Drehfeder beansprucht gemäß einer anderen vorteilhaften Weiterbildung besonders wenig Platz, wenn sie eine Spiralfeder ist. Wenn eine besonders hohe Sicherheit gegen einen Federbruch gefordert wird, können einfach zwei gleiche Spiralfedern, beispielsweise übereinander, in der erfindungsgemäßen Lastverstellvorrichtung angeordnet werden.

Die Erfindung läßt zahlreiche Ausführungsformen zu. Zur weiteren Verdeutlichung ihres Grundprinzips ist eine davon in der Zeichnung dargestellt und wird nachfolgend beschrieben. Diese zeigt in
- Fig. 1: einen Schnitt durch eine Lastverstellvorrichtung nach der Erfindung,
- Fig.2: eine teilweise geschnittene Seitenansicht der Lastverstellvorrichtung in Vollaststellung,
- Fig.3: eine teilweise geschnittene Seitenansicht der Lastverstellvorrichtung in Notlaufstellung,
- Fig.4: eine teilweise geschnittene Seitenansicht der Lastverstellvorrichtung in Minimallaststellung.

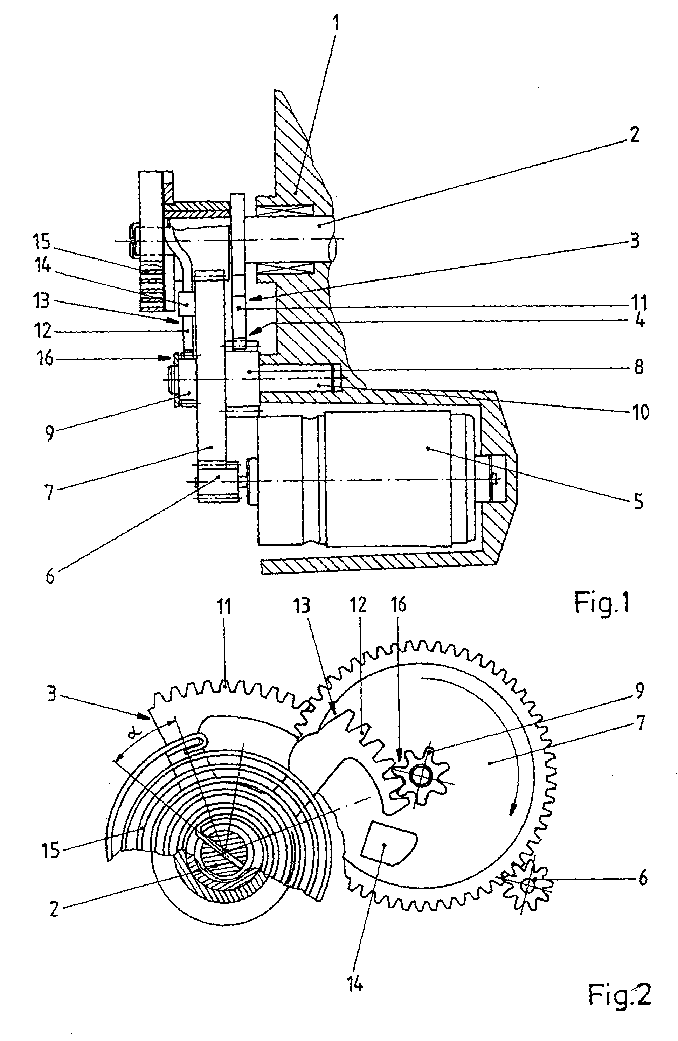

Die Figur 1 zeigt einen Teilbereich eines Gehäuses 1 eines Drosselklappenstutzens. In dem Gehäuse 1 ist eine Stellwelle 2 gelagert, bei der es sich um eine Drosselklappenwelle handeln kann, auf der eine nicht gezeigte Drosselklappe angeordnet ist. Drehfest auf der Stellwelle 2 sitzt ein als Zahnsegment ausgebildetes Stellteil 3, welches mittels eines Stellgetriebes 4 verschwenkbar ist.

Das Stellgetriebe 4 hat einen Stellmotor 5, der über ein Antriebsritzel 6 ein Zwischenzahnrad 7 antreibt. Dieses Zwischenzahnrad 7 ist gemeinsam mit zwei weiteren Zahnrädern 8, 9 auf einer Achse 10 gelagert und hat einen im Vergleich zu den anderen Zahnrädern 8, 9 besonders großen Durchmesser. Die beiden Zahnräder 8, 9 sind einander gegenüberliegend an dem Zwischenzahnrad 7 angeordnet und mit diesem drehfest verbunden. Das dem Gehäuse 1 am nächsten angeordnete Zahnrad 8 steht permanent im Eingriff mit der Verzahnung des als Zahnsegment 11 ausgebildeten Stellteils 3. Das Stellteil 3 bildet mit diesem Zahnrad 8 das Stellgetriebe 4. Das dem Gehäuse 1 am weitesten entfernt angeordnete Zahnrad 9 treibt in der dargestellten Stellung ein Zahnsegment 12 eines auf der Stellwelle 2 drehbar gelagerten Abstützteils 13 an. Das Abstützteil 13 und das Stellteil 3 besitzen damit eine gemeinsame Lagerachse. Das nahe dem Gehäuse 1 angeordnete Zahnrad 8 besitzt einen größeren Durchmesser als das auf der gegenüberliegenden Seite des Zwischenzahnrades 7 angeordnete Zahnrad 9. Hierdurch wird bei einem Verdrehen des Zwischenzahnrades 7 das Stellteil 3 stärker ausgelenkt als das Abstützteil 13.

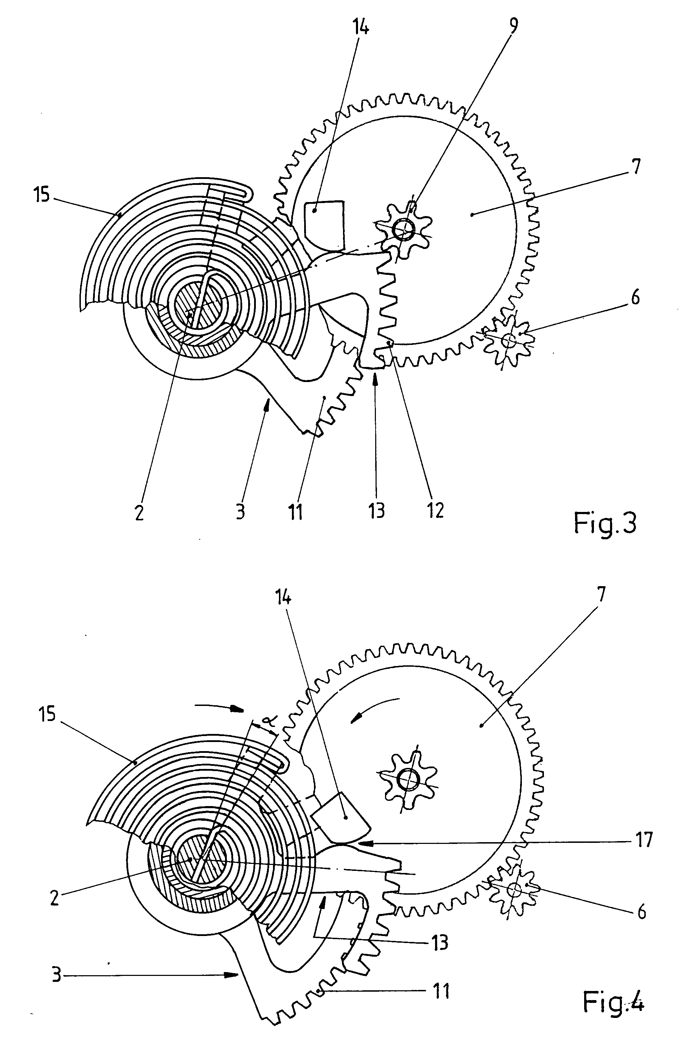

Wie in den Figuren 2 bis 4 deutlich zu erkennen ist, kann das Abstützteil 13 auch von einem Nocken 14 verschwenkt werden, welche axial aus derjenigen Stirnfläche des Zwischenzahnrades 7 ragt, die dem Abstützteil 13 zugewandt ist. Zum Zurückstellen der Stellwelle 2 bei Ausfall des Stellmotors 5 dient eine bei diesem Ausführungsbeispiel als Spiralfeder ausgebildete Drehfeder 15, welche mit einem Ende an der Stellwelle 2 und mit ihrem anderen Ende an dem Abstützteil 13 befestigt ist. Zur Verdeutlichung ist in den Figuren 2 und 4 jeweils ein Winkel α eingezeichnet, um den die Drehfeder 15 gegenüber der in Figur 3 eingezeichneten Stellung gespannt ist. In Figur 3 hat die Drehfeder 15 nur eine geringe Vorspannung.

Die Funktionsweise der erfindungsgemäßen Lastverstellvorrichtung ergibt sich aus den nachfolgenden Figuren 2, 3 und 4. Die Figur 2 zeigt die Vollaststellung der Lastverstellvorrichtung. In dieser Figur 2 ist zu sehen, daß das Zahnsegment 12 des Abstützteils 13 das auf der dem Gehäuse 1 abgewandten Seite des Zwischenzahnrades 7 angeordnete Zahnrad 9 kämmt. Das Zahnsegment 12 des Abstützteils 13 bildet mit diesem Zahnrad 9 ein Vollastgetriebe 16. Durch eine Verdrehung des das Zwischenzahnrad 7 antreibende Antriebsritzels 6 wird die Stellwelle 2 über das Stellteil 3 und gleichzeitig das Zahnsegment 12 des Abstützteils 13 bewegt. Da die Stellwelle 2 an einem Ende der Drehfeder 15 und das Abstützteil 13 mit dem anderen Ende der Drehfeder 15 befestigt ist und die an dem Zwischenzahnrad 7 angeordneten Zahnräder 8, 9 einen unterschiedlichen Durchmesser aufweisen, wird die Drehfeder 15 bei einer Drehbewegung des Zwischenzahnrades 7 im Uhrzeigersinn gespannt. Das ohne einen Antrieb durch den in Figur 1 gezeigten Stellmotor 5 auf die Stellwelle 2 wirksame Drehmoment ist eine Funktion der Übersetzungsverhältnisse des Vollastgetriebes 16, des Stellgetriebes 4 sowie des Stellwinkels der Stellwelle 2 und der Kennlinie der Drehfeder 15.

Wird das Zwischenzahnrad 7 aus der in Figur 2 gezeigten Stellung heraus entgegen dem Uhrzeigersinn verdreht, dann schwenkt das Stellteil 3 zunehmend im Uhrzeigersinn, bis sich das Zahnsegment 12 des Abstützteils 13 aus dem Zahnrad 9 des Vollastgetriebes 16 herausbewegt. Gleichzeitig bewegt sich der Nocken 14 gegen das Abstützteil 13. Wird eine in Figur 3 gezeigte Notlaufstellung erreicht, dann liegt der Nocken 14 an dem Abstützteil 13 an und das Zahnsegment 12 des Abstützteils 13 hat keinen Kontakt mehr zu dem Zahnrad 9 des Vollastgetriebes 16. Diese Notlaufstellung gemäß Figur 3 wird durch die Kraft der Drehfeder 15 zwangsläufig erreicht, wenn der in Figur 1 gezeigte Stellmotor 5 nicht bestromt wird.

Wird das Zwischenzahnrad 7 weiter gegen den Uhrzeigersinn bewegt, lenkt der Nocken 14 das Abstützteil 13 weiter aus, bis die in Figur 4 dargestellte Minimallaststellung erreicht ist. Die Drehfeder 15 wird bei dieser Bewegung gespannt. Die auf dem Zwischenzahnrad 7 angeordneten Nokken 14 bildet damit dem Abstützteil 13 ein Minimallastgetriebe 17, dessen Übersetzung abhängig ist von dem Abstand der Nocke 14 zu dem Drehpunkt des Zwischenzahnrades 7. Die Nocke 14 und das Abstützteil 13 haben an ihrer Berührungsstelle jeweils eine bogen- oder halbkreisförmige Kontur, so daß sich der Nocken 14 bei einer Drehung des Zwischenzahnrades 7 von der Notlaufstellung zu der Minimallaststellung an dem Abstützteil 13 reibungsarm abrollt.

## Patentansprüche

1. Lastverstellvorrichtung für ein die Leistung einer Brennkraftmaschine bestimmendes, insbesondere als Drosselklappe ausgebildetes, auf einer Stellwelle (2) angeordnetes Stellglied, wobei die Stellwelle (2) über ein drehfest mit ihr verbundenes Stellteil (3) mittels eines reversierbaren Stellgetriebes (4) zwischen einer Minimallaststellung und einer Vollaststellung schwenkbar antreibbar ist, mit einer als Drehfeder (15) ausgebildeten, vorgespannten Rückstellfeder, die die Stellwelle (2) in Minimallastrichtung beaufschlagt, und einer Notlauffeder, durch die die Stellwelle in Vollastrichtung bis zu einer Notlaufstellung bewegbar ist, **dadurch gekennzeichnet**, daß die Rückstellfeder und die Notlauffeder durch eine einzige Drehfeder (15) gebildet sind, deren erstes Ende mit der Stellwelle (2) und deren zweites Ende mit einem Abstützteil (13) verbunden ist, und daß mit dem Stellgetriebe (4) ein Vollastgetriebe (16) und ein Minimallastgetriebe (17) gekoppelt sind, wobei das Vollastgetriebe (16) zwischen der Vollaststellung und der Notlaufstellung und das Minimallastgetriebe (17) zwischen der Minimallaststellung und der Notlaufstellung zur Übertragung von Drehmomenten auf das Abstützteil (13) ausgebildet sind.

2. Lastverstellvorrichtung nach Anspruch 1, **dadurch gekennzeichnet,** daß das Abstützteil (13) ein Zahnsegment (12) hat, welches zum Kämmen eines mit dem Stellgetriebe (4) verbundenen Zahnrades (9) zwischen der Vollaststellung und der Notlaufstellung ausgebildet ist, und daß das Minimallastgetriebe (17) einen Nocken (14) hat, welche zum Verschwenken des Abstützteils (13) zwischen der Minimallaststellung und der Notlaufstellung ausgebildet ist.

3. Lastverstellvorrichtung nach Anspruch 1 oder 2, **dadurch gekennzeichnet**, daß das Abstützteil (13) auf der Stellwelle (2) drehbar gelagert ist.

4. Lastverstellvorrichtung nach zumindest einem der vorhergehenden Ansprüche, **dadurch gekennzeichnet**, daß das Stellgetriebe (4) ein von einem Antriebsritzel (6) angetriebenes durchmessergroßes Zwischenzahnrad (7) hat, welches mit einem das Stellteil (3) verschwenkenden durchmesserkleinen Zahnrad (8) und dem das Zahnsegment (12) des Abstützteils (13) antreibenden Zahnrad (9) drehfest und koaxial verbunden ist und daß der Nocken (14) auf dem Zwischenzahnrad (7) angeordnet ist.

5. Lastverstellvorrichtung nach zumindest einem der vorhergehenden Ansprüche, **dadurch gekennzeichnet,** daß der Nocken (14) eine bogenförmige und das Abstützteil (13) an seiner dem Nocken (14) zugewandten Seite eine halbkreisförmige Kontur aufweist.

6. Lastverstellvorrichtung nach zumindest einem der vorhergehenden Ansprüche, **dadurch gekennzeichnet,** daß die Drehfeder (15) eine Spiralfeder ist.

## Claims

1. Load adjustment device for a final control element that determines the power of an internal combustion engine, is designed, in particular, as a throttle valve and is arranged on an actuating shaft (2), the actuating shaft (2) being capable of being driven in a pivotable manner between a minimum-load position and a full-load position, via an actuating part (3) connected to it, by means of a reversible actuating mechanism (4), with a preloaded return spring, which is designed as a torsion spring (15) and acts upon the actuating shaft (2) in the direction of minimum load, and with an emergency-running spring, by means of which the actuating shaft can be moved in the direction of full load up to an emergency-running position, characterized in that the return spring and the emergency-running spring are formed by a single torsion spring (15), the first end of which is connected to the actuating shaft (2) and the second end of which is connected to a supporting part (13), and in that a full-load mechanism (16) and a minimum-load mechanism (17) are coupled to the actuating mechanism (4), the full-load mechanism (16) being designed to transmit torques to the supporting part (13) between the full-load position and the emergency-running position, and the minimum-load mechanism (17) being designed to transmit these torques to the supporting part (13) between the minimum-load position and the emergency-running position.

2. Load adjustment device according to Claim 1, characterized in that the supporting part (13) has a toothed segment (12) that, between the full-load position and the emergency-running position, is designed to mesh with a gearwheel (9) connected to the actuating mechanism (4), and in that the minimum-load mechanism (17) has a cam (14) that is designed to pivot the supporting part (13) between the minimum-load position and the emergency-running position.

3. Load adjustment device according to Claim 1 or 2, characterized in that the supporting part (13) is mounted rotatably on the actuating shaft (2).

4. Load adjustment device according to at least one of the preceding claims, characterized in that the actuating mechanism (4) has a large-diameter intermediate gearwheel (7), which is driven by an input pinion (6) and is connected coaxially and in a rotationally fixed manner relative to a small-diameter gearwheel (8) that pivots the actuating part (3) and to the gearwheel (9) that drives the toothed segment (12) of the supporting part (13), and in that the cam (14) is arranged on the intermediate gearwheel (7).

5. Load adjustment device according to at least one of the preceding claims, characterized in that the cam (14) has an arcuate contour, and the supporting part (13) has a semicircular contour on its side facing the cam (14).

6. Load adjustment device according to at least one of the preceding claims, characterized in that the torsion spring (15) is a spiral spring.

## Revendications

1. Dispositif de réglage de la charge pour un organe de réglage déterminant la puissance d'un moteur à combustion interne, en particulier formé en tant que soupape d'étranglement, disposé sur un arbre de commande (2), l'arbre de commande (2) pouvant être entraîné par l'intermédiaire d'un élément de réglage (3) connecté fixe en rotation avec celui-ci, au moyen d'un engrenage de réglage (4) réversible, de manière à pivoter entre une position de charge minimale et une position de pleine charge, comprenant un ressort de rappel précontraint formé en tant que ressort de torsion (15), qui sollicite l'arbre de commande (2) dans la direction de charge minimale, et un ressort de secours, qui permet de déplacer l'arbre de commande dans la direction de la pleine charge jusqu'à une position de secours, **caractérisé en ce que** le ressort de rappel et le ressort de secours sont formés par un unique ressort de torsion (15), dont la première extrémité est connectée à l'arbre de commande (2) et dont la deuxième extrémité est connectée à une pièce de support (13), et en ce que qu'un engrenage de pleine charge (16) et un engrenage de charge minimale (17) sont accouplés à l'engrenage de réglage (4), l'engrenage de pleine charge (16) étant formé entre la position de pleine charge et la position de secours et l'engrenage de charge minimale (17) étant formé entre la position de charge minimale et la position de secours pour le transfert des moments de rotation à la pièce de support (13).

2. Dispositif de réglage de la charge selon la revendication 1, **caractérisé en ce que** la pièce de support (13) a un segment denté (12), qui est formé pour l'engrènement d'une roue dentée (9) connectée à l'engrenage de réglage (4) entre la position de pleine charge et la position de secours, et en ce que l'engrenage de charge minimale (17) présente une came (14), qui est formée pour faire pivoter la pièce de support (13) entre la position de charge minimale et la position de secours.

3. Dispositif de réglage de la charge selon la revendication 1 ou 2, **caractérisé en ce que** la pièce de support (13) est montée rotative sur l'arbre de commande (2) .

4. Dispositif de réglage de la charge selon au moins l'une des revendications précédentes, **caractérisé en ce que** l'engrenage de réglage (4) a une roue dentée intermédiaire (7) de grand diamètre entraînée par un pignon d'entraînement (6), qui est connectée fixe en rotation et coaxialement à une roue dentée (8) de petit diamètre faisant pivoter l'élément de réglage (3) et à la roue dentée (9) entraînant le segment denté (12) de la pièce de support (13) et en ce que la came (14) est disposée sur la roue dentée intermédiaire (7).

5. Dispositif de réglage de la charge selon au moins l'une des revendications précédentes, **caractérisé en ce que** la came (14) présente un contour en forme d'arc et la pièce de support (13) présente, sur son côté tourné vers la came (14), un contour de forme semi-circulaire.

6. Dispositif de réglage de la charge selon au moins l'une des revendications précédentes, **caractérisé en ce que** le ressort de torsion (15) est un ressort spiral.
